# EUROPÄISCHE PATENTSCHRIFT

(11) **EP 3 180 537 B1**
(45) Veröffentlichungstag und Bekanntmachung des Hinweises auf die Patenterteilung: **02.10.2019**
(21) Anmeldenummer: 15747435.4
(22) Anmeldetag: 31.07.2015
(51) Int. Cl.: F16D 51/10, F16D 65/09, F16D 65/22

(54) **BREMSEINHEIT UND VERFAHREN ZUR WARTUNG EINER BREMSEINHEIT**
BRAKE UNIT AND METHOD FOR MAINTAINING A BRAKE UNIT
ENSEMBLE DE FREINAGE ET PROCÉDÉ D'ENTRETIEN D'UN ENSEMBLE DE FREINAGE

(30) Priorität: 12.08.2014 DE 102014215918
(43) Veröffentlichungstag der Anmeldung: 21.06.2017
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2015/067626
(87) Internationale Veröffentlichungsnummer: WO 2016/023771

(56) Entgegenhaltungen:
- US-A- 1 985 128
- US-A- 1 997 253
- US-A- 2 503 489
- US-A- 2 905 278

## Beschreibung

Die vorliegende Erfindung betrifft eine Bremseinheit, insbesondere zum Einsatz in Trommelbremssystemen, sowie ein Verfahren zur Wartung einer Bremseinheit.

Trommelbremsen mit Bremseinheiten im Allgemeinen sind aus dem Stand der Technik bekannt. Dabei ist innerhalb einer vorzugsweise hohlzylinderförmig ausgebildeten Bremstrommel eine Bremsbackenanordnung vorgesehen, welche über eine Betätigungseinheit mit einer Kraft beabstandet werden kann, wobei die Bremsbacken gegen das Innere der Bremstrommel gepresst werden. Bei aus dem Stand der Technik bekannten Bremstrommeln hat es sich jedoch als nachteilig erwiesen, dass zur Wartung der Bremseinheit zunächst die Bremstrommel und gemeinsam mit dieser zumeist die Fahrzeugräder oder eventuell zusätzlich angebrachte Außenbordmotoren demontiert werden müssen, bevor die Verschleißteile der Bremseinheit für einen Monteur erreichbar werden. Weiterhin hat es sich gezeigt, dass bei Bremseinheiten, bei denen die Bremsbacken an ihrem ersten Ende schwenkbar aufgehängt und an dem jeweils gegenüberliegenden Ende durch eine Betätigungseinheit mit einer Kraft beaufschlagt werden, die Montage und Demontage aufwendig ist. Weiterhin liegen der Bremsbacken durch die Schwenkbewegung nicht gleichmäßig an der Innenseite der Bremstrommel an, insbesondere auch verursacht durch den Effekt der Selbstverstärkung. Es wurden daher bereits Bremseinheiten gefunden, bei welchen die Bremsbacken nicht schwenkbar aufgehängt sind, sondern an die Trägereinheit geführt sind, wobei bei diesen Bremseinheiten jedoch die Wartung, insbesondere die Demontage und die Montage des Bremssystems besonders aufwändig ist.

Die US 1 997 253 A offenbart eine Fahrzeugbremse, bei welcher die Bremsbacken der Bremse über an dem Bremsträger festschraubbare Bolzen verlagerbar gehalten sind und von Sicherungselementen in Eingriff mit den Bolzen gehalten werden.

Aufgabe der vorliegenden Erfindung ist es, eine Bremseinheit bereitzustellen, welche besonders einfach zu montieren und demontieren ist und welche gleichzeitig einfach herzustellen ist und eine ausreichend hohe Bremswirkung insbesondere für den Einsatz in Nutzfahrzeugen erreicht.

Diese Aufgabe wird gelöst mit einer Bremseinheit gemäß Anspruch 1 sowie einem Verfahren zur Wartung einer Bremseinheit gemäß Anspruch 14. Weitere Vorteile und Merkmale der vorliegenden Erfindung ergeben sich aus den abhängigen Ansprüchen.

Erfindungsgemäß umfasst die Bremseinheit eine Trägereinheit und eine Backeneinheit, wobei die Trägereinheit an dem feststehenden Teil eines Nutzfahrzeugfahrwerkes festlegbar ist und einen ersten Führungsschenkel und einen zweiten Führungsschenkel aufweist, wobei der erste Führungsschenkel und der zweite Führungsschenkel voneinander beabstandet sind, wobei die Backeneinheit von den Führungsschenkeln gegen Verlagerung längs einer Führungsrichtung gesichert ist, wobei die Backeneinheit von einem an einem der Führungsschenkel festlegbaren Sicherungselement gegen Verlagerung längs einer Axialen gesichert ist, wobei die Backeneinheit längs einer Betätigungsrichtung relativ zur Trägereinheit verlagerbar ist. Die Bremseinheit umfasst somit vorzugsweise ausgewählte Baugruppen einer Trommelbremse eines Nutzfahrzeuges, wobei insbesondere die Trägereinheit und zumindest eine Backeneinheit Teil der Bremseinheit sind. Die Trägereinheit ist vorzugsweise der Bremsträger einer Trommelbremse und ist an dem feststehenden Teil, das heißt mit anderen Worten an dem nicht rotierenden Teil der Radaufhängung eines Nutzfahrzeugfahrwerkes, festlegbar oder bevorzugt festgelegt. Dabei weist die Trägereinheit vorzugsweise eine Flanschgeometrie auf, welche mit entsprechend korrespondierenden Flanschen an der starren Achse des Nutzfahrzeuges oder am gefederten Teil eines Nutzfahrzeugfahrwerkes, wie beispielsweise einem Längslenker, mittelbar oder unmittelbar festlegbar ist. Insbesondere bevorzugt ist die Trägereinheit im Inneren einer Bremstrommel angeordnet und weist einen ersten Führungsschenkel und einen zweiten Führungsschenkel auf. Vorzugsweise ist die Bremsbacke zwischen den Führungsschenkeln angeordnet und durch die Führungsschenkel gegen Verlagerung längs einer Führungsrichtung, das heißt sowohl längs als auch entgegen der Richtung, welche durch die Führungsrichtung vorgegeben wird, gesichert. Die Führungsschenkel sind erfindungsgemäß zwei gegossene oder geschmiedete, sich nach Montage im Inneren einer Bremstrommel erstreckende Abschnitte der Trägereinheit, welche vorzugsweise zwei zueinander parallel ausgerichtete Führungsflächen zur Führung der Backeneinheit aufweisen. An zumindest einem der Führungsschenkel ist im Rahmen der vorliegenden Erfindung ein Sicherungselement angeordnet oder bevorzugt festgelegt, welches mit der Backeneinheit in Eingriff bringbar ist, so dass es die Backeneinheit gegen Verlagerung längs einer Axialen bezogen auf die Trägereinheit sichert. Die Axiale ist dabei vorzugsweise eine Parallele zur Axialrichtung der Radaufhängung des Nutzfahrzeuges. Mit anderen Worten ist die Axiale die Rotationsachse des Rades des Nutzfahrzeugfahrwerkes oder eine Parallele zu dieser Rotationsachse. Besonders bevorzugt ist dabei die Axiale senkrecht zur Führungsrichtung ausgerichtet, wobei Axiale und Führungsrichtung besonders bevorzugt eine Ebene aufspannen. Weiterhin bevorzugt ist eine Betätigungsrichtung vorgesehen, entlang derer die Backeneinheit relativ zur Trägereinheit verlagerbar ist. Dabei ist vorzugsweise die Betätigungsrichtung senkrecht zu der von Axiale und Führungsrichtung aufgespannten Ebene ausgerichtet. Mit anderen Worten ist somit die Backeneinheit an der Trägereinheit derart angeordnet, dass eine Verlagerung zwischen Backeneinheit und Trägereinheit nur in Richtung einer Betätigungsrichtung oder entgegen dieser Betätigungsrichtung möglich ist. Besonders bevorzugt wird dabei die Backeneinheit längs der Betätigungsrichtung durch eine Betätigungseinheit mit einer Kraft beaufschlagt, wobei die Betätigungseinheit die Backeneinheit gegen die Bremstrommel presst und somit einen Bremsvorgang für beispielsweise ein Nutzfahrzeug einleitet. Dank der Verwendung eines Sicherungselement zur Sicherung der Backeneinheit gegen Verlagerung längs der Axialen ist es möglich, durch einfaches Entfernen des Sicherungselements die Backeneinheit aus der Bremstrommel herauszunehmen, zu warten und wieder in die Bremstrommel einzusetzen und das Sicherungselement anschließend wieder zur Sicherung der Backeneinheit an dem entsprechenden Führungsschenkel einzufügen. Auf diese Weise erlaubt die Bremseinheit eine besonders einfache Wartung, wobei der konstruktive Aufwand zur Auslegung und Herstellung der Bremseinheit vergleichsweise gering ist. Bevorzugt ist die Backeneinheit allein durch das Sicherungselement gegen Verlagerung entlang der Axialen relativ zur Trägereinheit gesichert. Hierdurch kann vorzugsweise allein durch die Demontage des Sicherungselements die Backeneinheit aus der Bremse entnommen werden. Vorzugsweise sichert das Sicherungselement die Backeneinheit über den gesamten Betätigungsweg, den die Backeneinheit im Betrieb der Bremse entlang der Betätigungsrichtung zurücklegt, gegen Verlagerung längs der Axialen.

Vorzugsweise ist am ersten Führungsschenkel ein erstes Sicherungselement lösbar festgelegt und/oder am zweiten Führungsschenkel ein zweites Sicherungselement lösbar festgelegt. In einer ersten bevorzugten Ausführungsform, welche eine besonders einfache Demontage und Montage der Bremseinheit verspricht, ist lediglich ein Sicherungselement an einem der beiden Führungsschenkel vorgesehen. Dabei ist je nach Erstreckung der entsprechenden Führungsfläche an den Führungsschenkeln längs der Axialen ein Herausrutschen der Backeneinheit aus der Trägereinheit nicht möglich, weil ansonsten ein Verkanten der Backeneinheit zwischen den Führungsschenkeln stattfinden würde. Es ist somit im Sinne einer einfachen Konstruktion der Bremseinheit möglich, lediglich mit einem Sicherungselement die entsprechende Funktion der lösbaren Sicherung der Backeneinheit an der Trägereinheit bereitzustellen. Weiterhin bevorzugt und insbesondere, wenn ein Verkanten vermieden werden soll, kann an jedem der Führungsschenkel ein Sicherungselement vorgesehen sein, wobei zumindest eines der Sicherungselemente lösbar ist. Mit anderen Worten kann beispielsweise das erste Sicherungselement als Gewindebolzen oder Schraube ausgeführt sein, während das zweite Sicherungselement beispielsweise ein fest an dem jeweils anderen Führungsschenkel festgelegter Vorsprung ist, welcher nicht lösbar ist. Bei dieser bevorzugten Ausführungsform kann die Backeneinheit in leicht schräger Stellung zwischen die beiden Führungsschenkel eingefügt werden und in der richtigen Position schließlich mit dem ersten Sicherungselement, vorzugsweise durch Einschrauben des ersten Sicherungselements, gegen Verlagerung entlang der Axialen gesichert sein.

In einer besonders bevorzugten Ausführungsform ist das Sicherungselement parallel zur Führungsrichtung in eine Aussparung des Führungsschenkels einführbar oder eingeführt und mit einer Eingriffsgeometrie in kraftschlüssigen und/oder formschlüssigen Eingriff bringbar oder gebracht. In einer ersten bevorzugten Ausführungsform kann das Sicherungselement dabei als Gewindebolzen, beispielsweise als versenkbare Schraube ausgebildet sein, welche in eine als Gewindebohrung in den Führungsschenkel eingebrachte Aussparung einführbar und in diese einschraubbar ist. Die Eingriffsgeometrie des Führungsschenkels ist in diesem Fall das Innengewinde in der Aussparung des Führungsschenkels. In einer alternativ bevorzugten Ausführungsform kann das Sicherungselement auch als Federklammer ausgebildet sein, welche in eine entsprechende Aussparung an dem Führungsschenkel einführbar ist. Die Federklammer stützt sich bevorzugt form- und kraftschlüssig an einer entsprechend korrespondierenden Eingriffsgeometrie, zum Beispiel einem Rücksprung oder Vorsprung, in der Aussparung ab und ist somit relativ zum Führungsschenkel in einer Position gehalten, in der es die Backeneinheit gegen Verlagerung längs der Axialen sichert. Der Vorteil einer Federklammer ist die sehr einfache Montage und Demontage der Verbindung zwischen Federklammer und Führungsschenkel. Der Vorteil eines als Schraubenelement ausgebildeten Sicherungselements ist, dass dieses im Allgemeinen höhere Kräfte übertragen kann als beispielsweise Federklammern und somit mit einer höheren Sicherheit die Backeneinheit gegen Verlagerung relativ zur Trägereinheit sichert.

Besonders bevorzugt weist die Aussparung einen Anschlag auf, an dem das Sicherungselement kraftschlüssig festlegbar ist und gegen Verdrehung um eine Parallele zur Führungsrichtung gesichert ist. Insbesondere in der bevorzugten Ausführungsform, nach der das Sicherungselement als Gewindebolzen oder Schraube ausgebildet ist, kann es bevorzugt sein, dass eine entsprechende Anschlaggeometrie vorgesehen ist, gegen welche das Sicherungselement gezwungen werden kann. Dabei verhindert die kraftschlüssige Verbindung zwischen dem Anschlag und dem Sicherungselement das ungewollte Herausdrehen des Sicherungselements im Betrieb der Bremse. Weiterhin bevorzugt können im Bereich des Anschlages auch weitere Eingriffsmittel vorgesehen sein, beispielsweise eine zahnähnliche Geometrie, deren Haltekraft nur mit einer bestimmten Schraubkraft durch den Anwender überwunden werden kann, um das Sicherungselement außer Eingriff mit dem Führungsschenkel zu bringen.

Besonders bevorzugt weist das Sicherungselement einen Sicherungsabschnitt auf, der mit einer Nut der Backeneinheit derart in Eingriff bringbar ist, das eine parallel zur Axialen wirkende Hinterschneidung zwischen dem Sicherungselement und der Nut gebildet ist. Der Sicherungsabschnitt des Sicherungselements ist vorzugsweise der Bereich des Sicherungselements, der in formschlüssigen Eingriff mit der Backeneinheit bringbar ist. Dabei weist die Backeneinheit vorzugsweise eine Nut auf, welche sich im Wesentlichen längs oder parallel zur Betätigungsrichtung erstreckt und somit eine Verlagerbarkeit der Backeneinheit längs der Betätigungsrichtung erlaubt, eine Verlagerung längs der Axialen aber verhindert. Mit anderen Worten verläuft die Nut dabei parallel zu der Betätigungsrichtung, entlang derer die Kraft einer Betätigungseinheit auf die Backeneinheit wirkt. Der Sicherungsabschnitt des Sicherungselements ist dabei dafür ausgelegt, in die Nut einzugreifen, wobei aber genug Spiel für eine leichtgängige Bewegung der Backeneinheit längs der Betätigungsrichtung relativ zum Sicherungselement und somit relativ zur Trägereinheit gewährleistet sein muss. Mit anderen Worten besteht zwischen der Nut und dem Sicherungsabschnitt vorzugsweise stets ein Spiel, welches eine leichte Verlagerung der Backeneinheit relativ zur Trägereinheit erlaubt und somit den Bremsvorgang und auch das Zurückziehen der Bremsbacke nach dem Bremsvorgang erleichtert. Besonders bevorzugt sichert der formschlüssige Eingriff zwischen Nut und dem Sicherungsabschnitt die Backeneinheit gegen Verlagerung in beiden Richtungen längs der Axialen.

Besonders bevorzugt ist das Sicherungselement als Gewindestift ausgebildet, der in die Aussparung des Führungsschenkels einschraubbar ist und einen zylindrischen Sicherungsabschnitt aufweist. Besonders bevorzugt ist das Sicherungselement dabei als Schraube mit in der Aussparung des Führungsschenkels versenkbarem Eingriffsabschnitt vorgesehen. Der Eingriffsabschnitt am Sicherungselement ist vorzugsweise ein Innensechskant oder ein Torx®, wobei insbesondere die leichte Handhabbarkeit bei der Demontage und Montage der Bremseinheit aufgrund des guten Eingriffs zwischen Werkzeug und Sicherungselement gewährleistet ist. Der zylindrische Sicherungsabschnitt ist am dem Eingriffsabschnitt gegenüberliegenden Ende des Sicherungselements vorgesehen und weist einen geringeren Durchmesser als der Eingriffsabschnitt auf. Mit Vorteil gelangt der zum Sicherungsabschnitt gewandte Teil des Eingriffsabschnitts in Eingriff mit dem Anschlag der Aussparung, wobei der aus dem Führungsschenkel herausrage Sicherungsabschnitt in Eingriff mit der vorzugsweise vorgesehenen Nut der Backeneinheit gelangen kann. Der Vorteil der Verwendung von Gewindestiften ist die besonders einfache und massenhafte Herstellung, welche zu einem besonders geringen Fertigungaufwand und Fertigungskosten für die Herstellung der Bremseinheit führt. Der Vorteil einer zylindrischen Ausbildung des Sicherungsabschnittes ist die bei unterschiedlichen Einschraubpositionen des Sicherungselements im Führungsschenkel stets gleiche Anlagefläche und somit Führungsfläche des Sicherungsabschnitts mit der Nut, welche die Backeneinheit gegen Verlagerung längs der Axialen sichert.

In einer weiteren bevorzugten Ausführungsform bildet das Sicherungselement eine Hinterschneidung, die die Backeneinheit nur in einer Entnahmerichtung längs der Axialen gegen Verlagerung relativ zur Trägereinheit sichert, wobei der Führungsschenkel vorzugsweise einen Halteschenkel aufweist, der sich im Wesentlichen längs der Führungsrichtung erstreckt und eine entgegen der Entnahmerichtung wirkende Hinterschneidung mit der Backeneinheit bildet. Als Entnahmerichtung wird im vorliegenden Fall vorzugsweise die Richtung definiert, entlang derer die Backeneinheit aus der Bremstrommel entnommen werden kann. Mit anderen Worten ist somit die Entnahmerichtung die Richtung, die am offenen Ende der Bremstrommel von der Bremstrommel weg weist. Zweckmäßigerweise ist die Entnahmerichtung parallel zur Axialen. Vorzugsweise ist hierbei das Sicherungselement an der zur offenen Seite der Bremstrommel hin weisenden Seite der Trägereinheit festgelegt bzw. angeflanscht und weist einen Sicherungsabschnitt auf, welcher die Backeneinheit gegen Verlagerung in Entnahmerichtung sichert. Auf der dem Sicherungselement gegenüberliegenden Seite der Trägereinheit bzw. des Führungsschenkels der Trägereinheit kann vorzugsweise auch ein zweites Sicherungselement vorgesehen sein. Alternativ hierzu weist der Führungsschenkel an seinem der Entnahmerichtung entgegen weisenden Ende einen Halteschenkel auf, welcher eine entgegen der Entnahmerichtung wirkende Hinterschneidung mit der Backeneinheit bildet, um diese gegen Verlagerung entgegen der Entnahmerichtung zu sichern. Der Vorteil dieser Ausführungsform ist, dass die Sicherungselemente von der offenen Seite der Bremstrommel aus an der Trägereinheit festgelegt werden können und somit eine noch einfachere Demontage und Montage der Bremseinheit möglich wird, als dies bei den seitlich, das heißt im Wesentlichen in radialer Richtung bezogen auf die Bremstrommel erfolgenden Montage von Sicherungselementen in den Führungsschenkeln der Fall ist. Besonders bevorzugt wird das Sicherungselement über eine Schraube oder einen Bolzen an dem jeweiligen Führungsschenkel festgelegt. Insbesondere bevorzugt sind zwei Sicherungselemente vorgesehen, von denen je eines an der jeweiligen in Entnahmerichtung weisenden Fläche eines Führungsschenkels festgelegt ist.

In einer bevorzugten Ausführungsform bildet der Führungsschenkel mit dem Halteschenkel und dem Sicherungselement eine im Wesentlichen U-förmige Geometrie aus. Alternativ zum Halteschenkel kann auch ein zweiter Führungsschenkel vorgesehen sein, welcher zur Vereinheitlichung bei der Herstellung der Bremseinheit führt und somit Kosten einspart. Die im Wesentlichen U-förmige Geometrie ist geeignet, die Backeneinheit gegen Verlagerung sowohl in Entnahmerichtung als auch entgegen der Entnahmerichtung relativ zur Trägereinheit zu sichern und gleichzeitig eine Verlagerungsbewegung der Backeneinheit längs der Betätigungsrichtung zu erlauben. Mit Vorteil müssen bei dieser Ausführungsform keine aufwändigen Führungsgeometrien wie beispielsweise eine Nut oder Aussparungen an den Führungsschenkeln und/oder an der Backeneinheit vorgesehen werden, wodurch die Fertigung der Bremseinheit vereinfacht ist und Kosten eingespart werden können.

Besonders bevorzugt bildet die Trägereinheit zumindest abschnittsweise das Gehäuse einer Betätigungseinheit. Für eine besonders kompakte Auslegung der Bremseinheit ist es bevorzugt, dass die Trägereinheit einen Abschnitt aufweist, welcher das Gehäuse einer in diesem Abschnitt angeordneten Betätigungseinheit, wie beispielsweise einer Spreizkeileinrichtung einer Spreizkeiltrommelbremse, bildet. Dabei weist die Trägereinheit bevorzugt einen zentralen Abschnitt auf, an welchem die Führungsschenkel voneinander beabstandet vorgesehen sind, und welcher einen Hohlraum aufweist, der für die Aufnahme einer Spreizkeilvorrichtung geeignet ist. Weiterhin weist die Trägereinheit bevorzugt auch Führungsabschnitte für die Kolbenelemente einer Spreizkeileinrichtung auf, besonders bevorzugt ist die Trägereinheit dabei als einstückiges Gussteil ausgeführt, wodurch insbesondere die Fertigung vereinfacht werden kann und die Zahl der nötigen Bearbeitungsschritte zur Herstellung einer Trägereinheit vereinfacht wird.

Vorzugsweise greift das Sicherungselement mit einer Überlappungslänge an der Bremsbacke an, wobei in einem montierten Zustand der Bremseinheit die Backeneinheit von dem Führungsschenkel mit einem maximalen Spiel beabstandet ist, wobei das Verhältnis zwischen dem maximalen Spiel und der Überlappungslänge bei 0,01 bis 0,6, vorzugsweise bei 0,05 bis 0,4 und besonders bevorzugt bei ca. 0,05 bis 0,2 liegt. Damit die Backeneinheit relativ zur Trägereinheit entlang der Betätigungsrichtung verlagerbar ist, ist es erforderlich, dass zwischen den entsprechenden Eingriffsflächen der Führungsschenkel und der korrespondierenden Eingriffsfläche der Backeneinheit ein Spiel besteht, damit die Backeneinheit nicht an der Trägereinheit verkantet und verklemmt. Dieses Spiel ist vorzugsweise groß genug, um bei Erwärmung der Bremsbacke auch deren Ausdehnung kompensieren zu können. Mit Vorteil greift das Sicherungselement mit einer Überlappungslänge an der Backeneinheit ein, wobei die Überlappungslänge mit Vorteil deutlich größer ist als der Betrag des maximalen Spiels zwischen Trägereinheit und Backeneinheit. Auf diese Weise kann verhindert werden, dass beim Betrieb der Bremseinheit durch Rüttelbewegungen oder hohe Kräfte, welche auf die Backeneinheit einwirken, diese aus ihrer Führung durch die Sicherungselemente herausrutscht. Es hat sich dabei im vorliegenden Fall das bevorzugte Verhältnis von 0,01 bis 0,6 des maximalen Spiels zwischen der Backeneinheit und dem Führungsschenkel und der Überlappungslänge des Sicherungselements mit der entsprechenden Eingriffsgeometrie der Backeneinheit bewährt, da dieser Verhältnisbereich einen guten Kompromiss aus der erforderlichen Sicherheit gegen Herausspringen der Backeneinheit aus ihrer Führung zum einen und eine Gewichtsersparnis durch Vermeiden von Überdimensionierung der Führungsschenkel und des Sicherungselements zum anderen erlaubt. Bei den Ausführungsformen, bei welchen das Sicherungselement vorzugsweise nur in der Entnahmerichtung eine Sicherung für die Backeneinheit darstellt, ist die Überlappungslänge vorzugsweise die Länge, entlang derer eine Hinterschneidung mit der Backeneinheit gebildet ist. Das besonders bevorzugte Verhältnis von 0,05 bis 0,4 erlaubt es, dass insbesondere, wenn das Sicherungselement in eine Nut an der Backeneinheit eingreift, diese Nut nicht zu tief ausgeführt ist, wodurch Materialschwächungen an der Backeneinheit möglichst gering gehalten werden können und gleichzeitig dennoch eine hohe Sicherheit gegen Herausspringen der Backeneinheit aus ihrer Führung an der Trägereinheit gewährleistet ist. Der insbesondere bevorzugte Bereich von 0,05 bis 0,2 hat sich dabei insbesondere für den Einsatz in hoch belasteten Nutzfahrzeugen bewährt, da bei diesen sowohl Materialschwächungen vermieden werden sollen als auch das Gewicht der Bremseinheit gering gehalten werden muss, um die hohen Anforderung an derartige Bremssysteme zu erfüllen. Mit Vorteil ist bei einer geringeren Überlappungslänge auch das Sicherungselement kürzer ausgebildet, wodurch insbesondere Gewicht gespart wird als auch der Ein- und Ausbau des Sicherungselements erleichtert wird.

In einer besonders bevorzugten Ausführungsform weist die Trägereinheit vier Führungsschenkel auf, von denen je zwei eine Backeneinheit gegen Verlagerung parallel zur Führungsrichtung sichern, wobei ein erstes Paar Führungsschenkel vorzugsweise ebenensymmetrisch zu einem zweiten Paar Führungsschenkel bezogen auf eine von der Führungsrichtung und der Axialen aufgespannte Ebene ausgebildet ist. Die ebenensymmetrische Ausbildung der Trägereinheit erlaubt insbesondere, dass gleich ausgebildete Backeneinheiten sowohl an der einen als auch der anderen Seite der Trägereinheit zum Einsatz gelangen können und somit eine Vereinheitlichung der Herstellung der Backeneinheiten möglich ist. Besonders bevorzugt ist dabei mittig zwischen den vier Führungsschenkeln ein als Gehäuse einer Betätigungseinheit ausgebildeter Bereich der Trägereinheit angeordnet.

Besonders bevorzugt sind die Backeneinheiten von einem Rückstellelement gegen eine Betätigungseinheit vorgespannt. Dabei ist die Betätigungseinheit vorzugsweise die Spreizkeileinheit einer Spreizkeiltrommelbremse und ist mittig zwischen zwei gegenüberliegenden Backenelementen angeordnet. Das Rückstellelement kann dabei vorzugsweise als Schraubenfeder oder als Federbügel ausgebildet sein und dient zur Wiederherstellung des Zustands der Bremseinheit, in welchem die Backeneinheiten nicht in Eingriff mit der Bremstrommel stehen. Für eine Demontage der Bremseinheit ist es dabei bevorzugt, das zunächst das eine oder die Vielzahl von Rückstellelementen zwischen den Backeneinheiten gelöst wird, wonach es anschließend leichter ist, die Backeneinheiten aus der Bremseinheit zu entnehmen.

Vorzugsweise sind zwei oder eine Vielzahl von Sicherungselementen an einem Führungsschenkel vorgesehen und sichern die Backeneinheit gegen Verlagerung längs der Axialen. Die Sicherungselemente können dabei sowohl längs der Axialen als auch längs der Betätigungsrichtung zueinander versetzt angeordnet sein. Mit Vorteil ist durch die Sicherungselemente somit eine Verkippsicherung für die Backeneinheit gegeben und es kann auch bei Ausfall eines der Sicherungselemente die Backeneinheit in ihrer Position an der Trägereinheit gehalten werden.

Erfindungsgemäß ist ein Verfahren zur Wartung einer Bremseinheit vorgesehen, wobei in einem ersten Zustand eine Backeneinheit im Inneren einer Bremstrommel an einer Trägereinheit und einem Sicherungselement längs einer Betätigungsrichtung verlagerbar gehalten ist, wobei die Trägereinheit zwei als gegossene oder geschmiedete Abschnitte ausgebildete Führungsschenkel aufweist, zwischen denen die Backeneinheit gehalten ist und welche sich im Inneren der Bremstrommel erstrecken, wobei in einem ersten Schritt das Sicherungselement außer Eingriff mit der Backeneinheit gebracht wird, wobei in einem zweiten Schritt die Backeneinheit längs einer Axialen verlagert und aus dem Inneren der Bremstrommel entnommen wird, wobei die Trägereinheit im Inneren der Bremstrommel verbleibt. Der Vorteil des im Rahmen der vorliegenden Erfindung bereitgestellten Wartungsverfahrens ist, dass die Bremstrommel nicht von der Bremseinheit demontiert werden muss, um an die Backeneinheiten heranzukommen. Insbesondere bevorzugt kann dabei auf einfache Weise das Sicherungselement bei installierter Bremstrommel gelöst werden, wodurch die Backeneinheit ohne Weiteres aus der Bremstrommel und somit aus der Bremseinheit entfernbar ist, ohne das die Trägereinheit relativ zur Bremstrommel verlagert wird. Insbesondere bevorzugt kann diese Wartungsarbeit von der Innenseite des Nutzfahrzeuges erfolgen, während die Räder und zusätzlichen Komponenten an der Radaufhängung des Nutzfahrzeuges installiert verbleiben können. Dies vereinfacht die Wartungsarbeiten für den Betrieb einer Bremseinheit enorm und senkt somit deren Betriebskosten. Nachdem die Backeneinheiten aus der Bremstrommel entnommen wurden, können auf einfache Weise neue Belagelemente an die Backeneinheit angefügt werden und anschließend wieder in dem Bremssystem verbaut werden.

In einer bevorzugten Ausführungsform wird an die zuvor genannten Verfahrensschritte anschließend die Backeneinheit mit erneuerten Bremsbelägen längs der Axialen in das Innere der Bremstrommel eingeführt und zwischen zwei Führungsschenkeln der Trägereinheit angeordnet, wobei anschließend das Sicherungselement in Eingriff mit der Backeneinheit gebracht wird, um diese gegen Verlagerung längs der Axialen zu sichern. Besonders bevorzugt sind dabei nach dem Einführen der Backeneinheit in das Innere der Bremstrommel zwei Sicherungselement vorgesehen, von denen jedes in Eingriff mit der Backeneinheit gebracht wird und somit auf effektive Weise eine Sicherung der Backeneinheit gegen Verlagerung längs bzw. parallel zur Axialen erreicht.

Weitere Vorteile und Merkmale der vorliegenden Erfindung ergeben sich aus der nachfolgenden Beschreibung ausgewählter Ausführungsformen mit Bezug auf die beigefügten Figuren. Es zeigen:
- Fig. 1a: eine erste Ansicht einer ersten bevorzugten Ausführungsform der erfindungsgemäßen Bremseinheit,
- Fig. 1b: eine zweite Ansicht der in Fig. 1a gezeigten, bevorzugten Ausführungsform,
- Fig. 2: eine teilweise geschnittene Ansicht einer weiteren bevorzugten Ausführungsform der erfindungsgemäßen Bremseinheit,
- Fig. 3: eine teilweise geschnittene Ansicht einer weiteren bevorzugten Ausführungsform, und
- Fig. 4: eine Ansicht einer weiteren bevorzugten Ausführungsform der erfindungsgemäßen Bremseinheit.

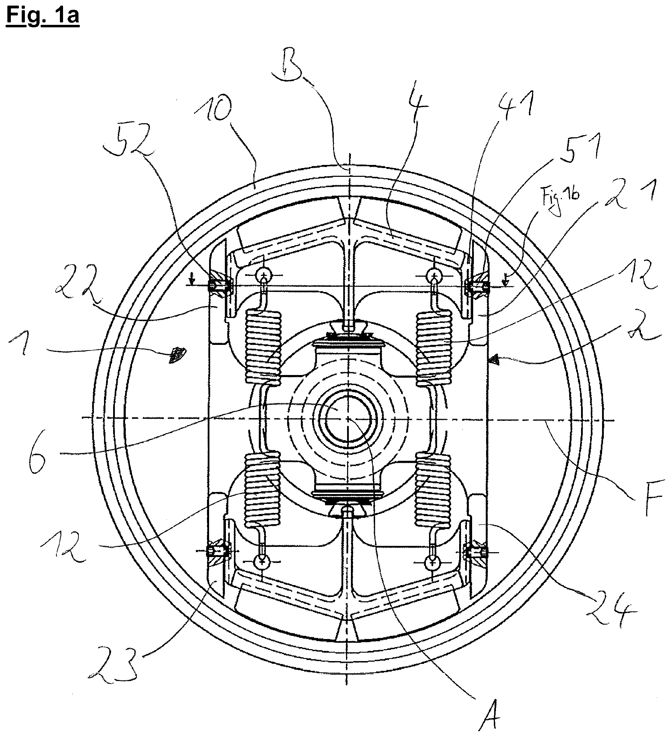

Bei der in Fig. 1A gezeigten Ansicht einer bevorzugten Ausführungsform der erfindungsgemäßen Bremseinheit 1 ist diese Bremseinheit im Inneren einer Bremstrommel 10 angeordnet. Die Bremseinheit 1 weist eine Trägereinheit 2 sowie vorzugsweise zwei Backeneinheiten 4 auf. Die Trägereinheit 2 weist zumindest einen ersten Führungsschenkel 21 und einen zweiten Führungsschenkel 22 auf, wobei diese voneinander beabstandet sind und vorzugsweise einstückig mit den weiteren Bereichen der Trägereinheit ausgeführt sind. Zwischen den Führungsschenkeln 21, 22 ist die Backeneinheit 4 angeordnet und gegen Verlagerung längs oder parallel zu einer Führungsrichtung F gesichert. Mit anderen Worten stützt sich die Backeneinheit 4 entweder an dem ersten Führungsschenkel 21 oder dem zweiten Führungsschenkel 22 ab und wird auf diese Weise durch die Führungsschenkel 21, 22 gegen Verlagerung längs der Führungsrichtung F gesichert. Weiterhin weist die Backeneinheit 4 an der jeweils zu einem Führungsschenkel 21, 22 hin weisenden Seite eine Nut 41 auf, in welche ein Sicherungselement 51, 52 eingreift, und die Backeneinheit 4 gegen Verlagerung längs oder parallel einer Axialen A sichert. Die Axiale A ist dabei vorzugsweise die Betrachtungsrichtung der gezeigten Ausführungsform und insbesondere bevorzugt die Rotationsachse der Bremstrommel 10 um die Bremseinheit 1. Das Sicherungselement 51, 52 ist vorzugsweise als Gewindestift ausgeführt und in eine entsprechende Aussparung an dem Führungsschenkel 21, 22 eingeschraubt. Bei dieser bevorzugten Ausführungsform ist die Trägereinheit 2 vorzugsweise spiegelsymmetrisch zu einer durch die Axiale A und die Führungsrichtung F aufgespannten Ebene ausgebildet. Mit anderen Worten weist die Trägereinheit 2 in ihrem unteren Bereich zwei im Wesentlichen identisch zu den im oberen Bereich angeordneten Führungsschenkeln 21, 22 ausgebildete Führungsschenkel 23, 24 auf, an welchen ebenfalls ein Sicherungselement 51, 52 vorgesehen ist und eine Backeneinheit 4 gegen Verlagerung längs der Führungsrichtung F und der Axialen A gesichert ist. Mittig zwischen den vier Führungsschenkeln 21, 22, 23, 24 ist die Trägereinheit 2 vorzugsweise als Gehäuse einer Betätigungseinheit 6 ausgebildet, wobei die Betätigungseinheit 6 die jeweils an der Trägereinheit 2 gelagerten Backeneinheiten 4 mit einer Kraft beaufschlagt, um diese gegen die Innenseite der Bremstrommel 10 zu pressen. Dabei sind die Backeneinheiten 4 vorzugsweise durch zwei Rückstellelemente 12 gegen die Betätigungseinheit 6 vorgespannt. Die in dieser bevorzugten Ausführungsform gezeigten Backeneinheiten 4 sind somit vorzugsweise lediglich längs einer Betätigungsrichtung B relativ zur Trägereinheit 2 verlagerbar.

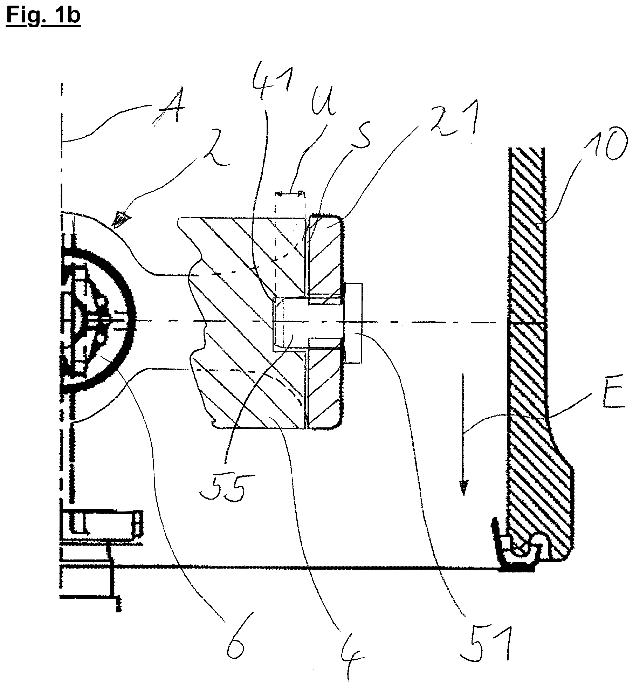

Fig. 1b zeigt die in Fig. 1a gekennzeichnete Schnittansicht der in Fig. 1a gezeigten, bevorzugten Ausführungsform der Bremseinheit 1. Dabei ist insbesondere der Eingriffsbereich zwischen dem Sicherungselement 51 und dem korrespondierenden Führungsschenkel 21 offenbart. Weiterhin ist erkennbar, dass das Sicherungselement 51 jeweils einen Sicherungsabschnitt 55 aufweist, welcher mit der Nut 41 der Backeneinheit 4 in formschlüssigen Eingriff gebracht ist. Weiterhin ist die Überlappungslänge U gezeigt, welche vorzugsweise ein Vielfaches des Spiels S zwischen Backeneinheit 4 und Führungsschenkel 21 ist.

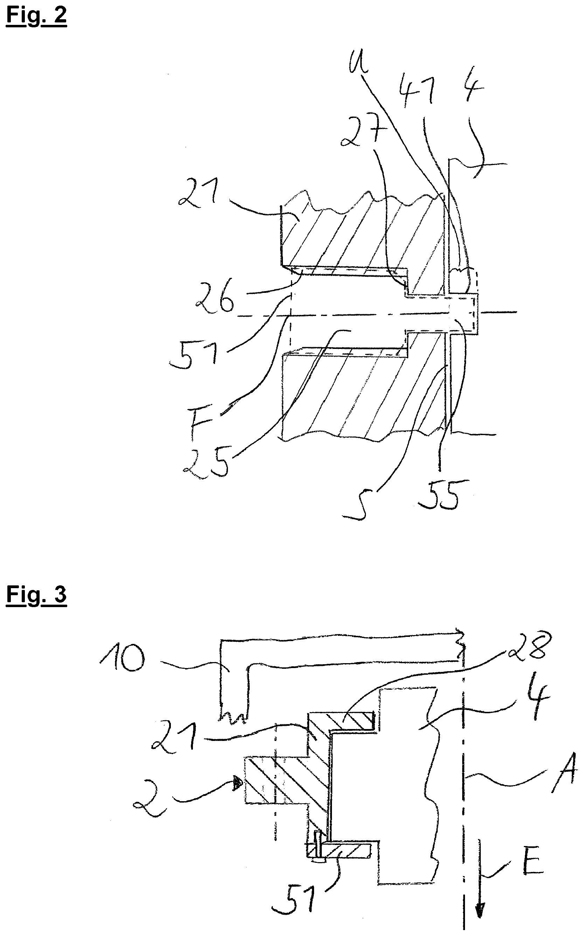

Fig. 2 zeigt eine Schnittansicht einer weiteren bevorzugten Ausführungsform der erfindungsgemäßen Bremseinheit 1, wobei die Aussparung 25 an dem Führungsschenkel 21 mit einem als Innengewinde ausgebildeten Eingriffselement 26 ausgestattet ist. Weiterhin ist erkennbar, dass auf der zur Backeneinheit 4 hin weisenden Seite der Aussparung 25 ein Anschlag 27 vorgesehen ist, an welchem ein gestrichelt dargestelltes Sicherungselement 51 zur Anlage bringbar ist und aufgrund der Verschraubung mit dem Eingriffsmittel 26 gegen den Anschlag gespannt werden kann, so dass ein ungewolltes Herausdrehen während des Betriebs der Bremseinheit 1 verhindert werden kann. Weiterhin weist das Sicherungselement 51 einen Sicherungsabschnitt 55 auf, welcher durch die verkleinerte Aussparung rechts des Anschlages 27 hindurchragt und mit der Nut 41 in der Backeneinheit 4 mit einer Überlappungslänge U in formschlüssigen Eingriff bringbar ist. Weiterhin ist dargestellt, dass zwischen der Backeneinheit 4 und dem Führungsschenkel 21 ein Spalt vorgesehen ist, welcher eine Breite von einem Spiel S aufweist. Im Rahmen der vorliegenden Erfindung ist es besonders bevorzugt, dass das Spiel S wesentlich kleiner ist als die Überlappungslänge U.

Fig. 3 zeigt eine Schnittansicht einer weiteren bevorzugten Ausführungsform der erfindungsgemäßen Bremseinheit 1, wobei das Sicherungselement 51 nicht als Schraube ausgeführt ist, sondern ein blechförmiges Element ist, welches längs der Axialen A vorzugsweise mittels eines Schraubenelements gegen eine Seite des Führungsschenkels 21 verschraubt ist. Dabei sichert das Sicherungselement 51 die Backeneinheit 4 nur gegen Verlagerung relativ zur Trägereinheit 2 in einer Entnahmerichtung E. Die Entnahmerichtung E verläuft dabei vorzugsweise parallel zur Axialen A. An seinem, dem Sicherungselement 51 gegenüberliegenden Ende weist der Führungsschenkel 21 vorzugsweise einen Halteabschnitt 28 auf, welcher die Backeneinheit 4 gegen Verlagerung entgegen der Entnahmerichtung E relativ zur Trägereinheit 2 sichert.

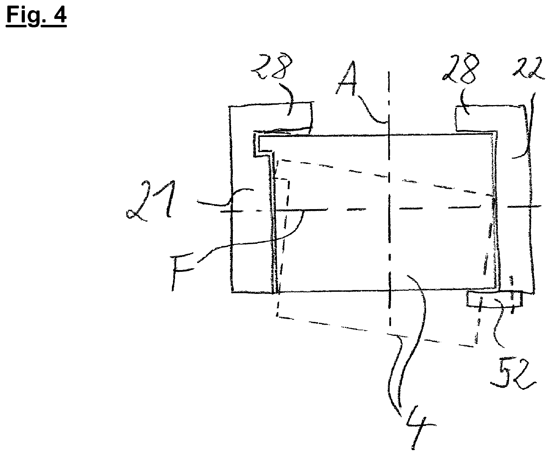

Fig. 4 zeigt eine weitere bevorzugte Ausführungsform der erfindungsgemäßen Bremseinheit, bei welcher nur ein Sicherungselement 52 benötigt wird, um die Backeneinheit 4 gegen Verlagerung längs der Axialen A zu sichern. Dabei wird die Backeneinheit 4, wie gestrichelt dargestellt, in leicht schräger Stellung in den Zwischenraum zwischen dem ersten Führungsschenkel 21 und dem zweiten Führungsschenkel 22 eingeführt und rastet an ihrer oben links gezeigten Seite in eine Nut am ersten Führungsschenkel 21 ein. Weiterhin weisen die Führungsschenkel 21, 22 jeweils einen Halteabschnitt 28 auf, welcher eine Verlagerung der Backeneinheit 4 längs der Axialen A in zumindest einer Richtung verhindert. Nachdem die Backeneinheit 4 in die Trägereinheit 2 eingesetzt ist, wird das Sicherungselement 52 an dem zweiten Führungsschenkel verschraubt und sichert auf diese Weise die Backeneinheit 4 in ihrer Einbauposition insbesondere in Bezug auf die Führungsrichtung F und die Axiale A.

### Bezugszeichenliste

- 2: - Trägereinheit
- 21: - erster Führungsschenkel
- 22: - zweiter Führungsschenkel
- 23: - dritter Führungsschenkel
- 24: - vierter Führungsschenkel
- 25: - Aussparung
- 26: - Eingriffsmittel
- 28: - Halteschenkel
- 4: - Backeneinheit
- 51: - erstes Sicherungselement
- 52: - zweites Sicherungselement
- 55: - Sicherungsabschnitt
- 10: - Bremstrommel
- 12: - Rückstellelement
- A: - Axiale
- B: - Betätigungsrichtung
- F: - Führungsrichtung
- E: - Entnahmerichtung
- S: - maximales Spiel
- U: - Überlappungslänge

## Patentansprüche

1. Bremseinheit (1), insbesondere zum Einsatz in einer Trommelbremse, umfassend eine Trägereinheit (2) und eine Backeneinheit (4),
wobei die Trägereinheit (2) an dem feststehenden Teil eines Nutzfahrzeugfahrwerkes festlegbar ist und einen ersten Führungsschenkel (21) und einen zweiten Führungsschenkel (22) aufweist,
wobei der erste Führungsschenkel (21) und der zweite Führungsschenkel (22) voneinander beabstandet sind,
wobei die Backeneinheit (4) von den Führungsschenkeln (21, 22) gegen Verlagerung längs einer Führungsrichtung (F) gesichert ist,
wobei die Backeneinheit (4) von einem an einem der Führungsschenkel (21, 22) festlegbaren Sicherungselement (51, 52) gegen Verlagerung längs einer Axialen (A) gesichert ist,
wobei die Backeneinheit (4) längs einer Betätigungsrichtung (B) relativ zur Trägereinheit (2) verlagerbar ist,
**dadurch gekennzeichnet, dass** die Führungsschenkel (21, 22) zwei gegossene oder geschmiedete Abschnitte der Trägereinheit (2) sind, welche sich nach Montage im Inneren einer Bremstrommel (10) erstrecken.

2. Bremseinheit (1) nach Anspruch 1,
wobei am ersten Führungsschenkel (21) ein erstes Sicherungselement (51) lösbar festgelegt ist und/oder am zweiten Führungsschenkel (22) ein zweites Sicherungselement (52) lösbar festgelegt ist.

3. Bremseinheit (1) nach einem der vorhergehenden Ansprüche,
wobei das Sicherungselement (51, 52) parallel zur Führungsrichtung (F) in eine Aussparung (25) des Führungsschenkels (21, 22) einführbar ist und mit einer Eingriffsgeometrie (26) in kraftschlüssigen und/oder formschlüssigen Eingriff bringbar ist.

4. Bremseinheit (1) nach Anspruch 3,
die Aussparung (25) einen Anschlag aufweist, an dem das Sicherungselement (51, 52) kraftschlüssig festlegbar ist und gegen Verdrehung um eine Parallele zur Führungsrichtung (F) gesichert ist.

5. Bremseinheit (1) nach einem der vorhergehenden Ansprüche,
wobei das Sicherungselement (51, 52) einen Sicherungsabschnitt (55) aufweist, der mit einer Nut (41) der Backeneinheit (4) derart in Eingriff bringbar ist, dass eine parallel zur Axialen (A) wirkende Hinterschneidung zwischen dem Sicherungselement (51, 52) und der Nut (41) gebildet ist.

6. Bremseinheit (1) nach einem der Ansprüche 3 bis 5,
wobei das Sicherungselement (51, 52) als Gewindestift ausgebildet ist, der in die Aussparung (25) des Führungsschenkels (21, 22) einschraubbar ist und einen zylindrischen Sicherungsabschnitt (55) aufweist.

7. Bremseinheit (1) nach einem der Ansprüche 1 oder 2,
wobei das Sicherungselement (51, 52) eine Hinterschneidung bildet, die die Backeneinheit (4) nur in einer Entnahmerichtung (E) längs der Axialen (A) gegen Verlagerung relativ zur Trägereinheit (2) sichert,
wobei der Führungsschenkel (21, 22) vorzugsweise einen Halteschenkel (28) aufweist, der sich im Wesentlichen längs der Führungsrichtung (F) erstreckt und eine entgegen der Entnahmerichtung (E) wirkende Hinterschneidung mit der Backeneinheit (4) bildet.

8. Bremseinheit (1) nach Anspruch 7,
wobei der Führungsschenkel (21, 22) mit dem Halteschenkel (28) und dem Sicherungselement (51, 52) eine im Wesentlichen U-förmige Geometrie ausbildet.

9. Bremseinheit (1) nach einem der vorhergehenden Ansprüche,
wobei die Trägereinheit (2) zumindest abschnittsweise das Gehäuse einer Betätigungseinheit (6) bildet.

10. Bremseinheit (1) nach einem der vorhergehenden Ansprüche,
wobei das Sicherungselement (51, 52) mit einer Überlappungslänge (U) an der Backeneinheit (4) angreift,
wobei in einem montierten Zustand der Bremseinheit (1) die Backeneinheit (4) von dem Führungsschenkel (21, 22) mit einem maximalen Spiel (S) beabstandet ist,
wobei das Verhältnis zwischen dem maximalen Spiel (S) und der Überlappungslänge (U) bei 0,01 bis 0,6, vorzugsweise bei 0,05 bis 0,4 und besonders bevorzugt bei ca. 0,05 bis 0,2 liegt.

11. Bremseinheit (1) nach einem der vorhergehenden Ansprüche,
wobei die Trägereinheit (2) vier Führungsschenkel (21, 22, 23, 24) aufweist, von denen je zwei eine Backeneinheit (4) gegen Verlagerung parallel zur Führungsrichtung (F) sichern,
wobei ein erstes Paar Führungsschenkel (21, 22) vorzugsweise ebenensymmetrisch zu einen zweiten Paar Führungsschenkel (23, 24), bezogen auf eine von der Führungsrichtung (F) und der Axialen (A) aufgespannte Ebene, ausgebildet ist.

12. Bremseinheit (1) nach einem der vorhergehenden Ansprüche,
wobei die Backeneinheit (4) von einem Rückstellelement (12) gegen eine Betätigungseinheit vorgespannt ist.

13. Bremseinheit (1) nach einem der vorhergehenden Ansprüche,
wobei eine Vielzahl von Sicherungselementen (51, 52) an einem Führungsschenkel (21, 22) vorgesehen ist und die Backeneinheit (4) gegen Verlagerung längs der Axialen (A) sichert.

14. Verfahren zur Wartung einer Bremseinheit (1),
wobei in einem ersten Zustand eine Backeneinheit (4) im Innern einer Bremstrommel (10) an einer Trägereinheit (2) und einem Sicherungselement (51) längs einer Betätigungsrichtung (B) verlagerbar gehalten ist, wobei die Trägereinheit (2) zwei als gegossene oder geschmiedete Abschnitte ausgebildete Führungsschenkel (21, 22) aufweist, zwischen denen die Backeneinheit (4) gehalten ist und welche sich im Inneren der Bremstrommel (10) erstrecken,
wobei in einem ersten Schritt das Sicherungselement (51) außer Eingriff mit der Backeneinheit (4) gebracht wird,
wobei in einem zweiten Schritt die Backeneinheit (4) längs einer Axialen (A) verlagert und aus dem Innern der Bremstrommel (10) entnommen wird, wobei die Trägereinheit (2) im Innern der Bremstrommel (10) verbleibt.

15. Verfahren nach Anspruch 14,
wobei anschließend die Backeneinheit (4) mit erneuerten Bremsbelägen längs der Axialen (A) in das Innere der Bremstrommel (10) eingeführt und zwischen zwei Führungsschenkeln (21, 22) der Trägereinheit (2) angeordnet wird,
wobei anschließend das Sicherungselement (51, 52) in Eingriff mit der Backeneinheit (4) gebracht wird, um diese gegen Verlagerung längs der Axialen (A) zu sichern.

## Claims

1. A brake unit (1), in particular for use in a drum brake, comprising a carrier unit (2) and a jaw unit (4),
wherein the carrier unit (2) can be secured to the fixed portion of a utility vehicle chassis and has a first guiding member (21) and a second guiding member (22),
wherein the first guiding member (21) and the second guiding member (22) are spaced apart from each other,
wherein the jaw unit (4) is secured by the guiding members (21, 22) against displacement in a guiding direction (F),
wherein the jaw unit (4) is secured by means of a securing element (51, 52) which can be secured to one of the guiding members (21, 22) against displacement along an axial line (A),
wherein the jaw unit (4) can be displaced in an actuation direction (B) relative to the carrier unit (2),
**characterized in that**
the guiding members (21, 22) are two cast or forged portions of the carrier unit (2) which extend inside a brake drum (10), after mounting.

2. The brake unit (1) as claimed in claim 1 ,
wherein a first securing element (51) is releasably secured to the first guiding member (21) and/or a second securing element (52) is releasably secured to the second guiding member (22).

3. The brake unit (1) as claimed in either of the preceding claims,
wherein the securing element (51, 52) can be introduced parallel with the guiding direction (F) into a recess (25) of the guiding member (21, 22) and can be brought into non-positive-locking and/or positive-locking engagement with an engagement geometry (26).

4. The brake unit (1) as claimed in claim 3,
the recess (25) has a stop to which the securing element (51, 52) can be secured in a non-positive-locking and is secured against rotation about a parallel line with respect to the guiding direction (F).

5. The brake unit (1) as claimed in one of the preceding claims,
wherein the securing element (51, 52) has a securing portion (55) which can be brought into engagement with a groove (41) of the jaw unit (4) in such a manner that an undercut which acts parallel with the axial line (A) is formed between the securing element (51, 52) and the groove (41).

6. The brake unit (1) as claimed in one of claims 3 to 5,
wherein the securing element (51, 52) is constructed as a threaded pin which can be screwed into the recess (25) of the guiding member (21, 22) and which has a cylindrical securing portion (55).

7. The brake unit (1) as claimed in either claim 1 or claim 2,
wherein the securing element (51, 52) forms an undercut which secures the jaw unit (4) only in a removal direction (E) along the axial line (A) against displacement relative to the carrier unit (2),
wherein the guiding member (21, 22) preferably has a retention member (28) which extends substantially in the guiding direction (F) and which forms with the jaw unit (4) an undercut which acts counter to the removal direction (E).

8. The brake unit (1) as claimed in claim 7,
wherein the guiding member (21, 22) forms with the retention member (28) and the securing element (51, 52) a substantially U-shaped geometry.

9. The brake unit (1) as claimed in one of the preceding claims,
wherein the carrier unit (2) at least partially forms the housing of an actuation unit (6).

10. The brake unit (1) as claimed in one of the preceding claims,
wherein the securing element (51, 52) engages with an overlapping length (U) on the jaw unit (4),
wherein in an assembled state of the brake unit (1) the jaw unit (4) is spaced apart from the guiding member (21, 22) with maximum play (S),
wherein the ratio between the maximum play (S) and the overlapping length (U) is from 0.01 to 0.6, preferably from 0.05 to 0.4 and in a particularly preferred manner approximately from 0.05 to 0.2.

11. The brake unit (1) as claimed in one of the preceding claims,
wherein the carrier unit (2) has four guiding members (21, 22, 23, 24), two of which in each case secure a jaw unit (4) against displacement parallel with the guiding direction (F),
wherein a first pair of guiding members (21, 22) is preferably formed in a plane-symmetrical manner with respect to a second pair of guiding members (23, 24) with respect to a plane defined by the guiding direction (F) and the axial line (A).

12. The brake unit (1) as claimed in one of the preceding claims,
wherein the jaw unit (4) is pretensioned by a restoring element (12) against an actuation unit.

13. The brake unit (1) as claimed in one of the preceding claims,
wherein a plurality of securing elements (51, 52) are provided on a guiding member (21, 22) and secure the jaw unit (4) against displacement along the axial line (A).

14. A method for maintaining a brake unit (1),
wherein, in a first state, a jaw unit (4) is displaceably retained inside a brake drum (10) on a carrier unit (2) and a securing element (51) in an actuation direction (B),
wherein the carrier unit (2) has two guiding members (21, 22) which are in the form of cast or forged portions, between which the jaw unit (4) is retained and which extend inside the brake drum (10),
wherein, in a first step, the securing element (51) is moved out of engagement with the jaw unit (4),
wherein, in a second step, the jaw unit (4) is displaced along an axial line (A) and is removed from the inner side of the brake drum (10), wherein the carrier unit (2) remains inside the brake drum (10).

15. The method as claimed in claim 14,
wherein subsequently the jaw unit (4) with new brake linings is inserted along the axial line (A) into the inner side of the brake drum (10) and is arranged between two guiding members (21, 22) of the carrier unit (2),
wherein the securing element (51, 52) is subsequently brought into engagement with the jaw unit (4) in order to secure it against displacement along the axial line (A).

## Revendications

1. Unité de frein (1), en particulier pour l'utilisation dans un frein à tambour, incluant une unité porteuse (2) et une unité formant mâchoire (4),
dans laquelle l'unité porteuse (2) est susceptible d'être immobilisée sur une partie stationnaire du train de roulement d'un véhicule utilitaire et comprend un premier bras de guidage (21) et un second bras de guidage (22),
dans laquelle le premier bras de guidage (21) et le second bras de guidage (22) sont écartés l'un de l'autre,
dans laquelle l'unité formant mâchoire (4) est bloquée par les bras de guidage (21, 22) à l'encontre d'un déplacement le long d'une direction de guidage (F),
dans laquelle l'unité formant mâchoire (4) est bloquée par un élément de blocage (51, 52) susceptible d'être immobilisé sur l'un des bras de guidage (21, 22) à l'encontre d'un déplacement le long d'une direction axiale (A),
dans laquelle l'unité formant mâchoire (4) est déplaçable par rapport à l'unité porteuse (2) le long d'une direction d'actionnement (B),
**caractérisé en ce que** les bras de guidage (21, 22) sont deux portions venues de fonderie ou forgées de l'unité porteuse (2), qui s'étendent, après montage, dans l'intérieur d'un tambour de frein (10).

2. Unité de frein (1) selon la revendication 1,
dans laquelle un premier élément de blocage (51) est immobilisé de façon détachable sur le premier bras de guidage (21) et/ou dans laquelle un second élément de blocage (52) est immobilisé de façon détachable sur le second bras de guidage (22).

3. Unité de frein (1) selon l'une des revendications précédentes,
dans laquelle l'élément de blocage (51, 52) est susceptible d'être introduit parallèlement à la direction de guidage (F) jusque dans un évidement (25) du bras de guidage (21, 22) et peut être amené au moyen d'une géométrie d'engagement (26) dans un engagement à coopération de forces et/ou à coopération de formes.

4. Unité de frein (1) selon la revendication 3,
dans laquelle l'évidement (25) comporte une butée contre laquelle l'élément de blocage (51, 52) est immobilisable par coopération de forces et est bloqué à l'encontre d'une rotation autour d'une parallèle à la direction de guidage (F).

5. Unité de frein (1) selon l'une des revendications précédentes,
dans laquelle l'élément de blocage (51, 52) comprend une portion de blocage (55), qui peut être amenée en engagement avec une gorge (41) de l'unité formant mâchoire (4) de telle manière qu'il se forme une contre-dépouille agissant parallèlement à la direction axiale (A), entre l'élément de blocage (51, 52) et la gorge (41).

6. Unité de frein (1) selon l'une des revendications 3 à 5,
dans laquelle l'élément de blocage (51, 52) est réalisé sous forme de tige filetée, qui peut être vissée dans l'évidement (25) du bras de guidage (21, 22) et qui comporte une portion de blocage cylindrique. (55).

7. Unité de frein (1) selon l'une des revendications 1 ou 2,
dans laquelle l'élément de blocage (51, 52) forme une contre-dépouille, qui bloque l'unité formant mâchoire (4) uniquement dans une direction d'enlèvement (E) le long de la direction axiale (A), à l'encontre d'un déplacement par rapport à l'unité porteuse (2),
dans laquelle le bras de guidage (21, 22) comprend de préférence un bras de maintien (28) qui s'étend sensiblement le long de la direction de guidage (F) et qui forme avec l'unité formant mâchoire (4) une contre-dépouille agissant à l'encontre de la direction d'enlèvement (E).

8. Unité de frein (1) selon la revendication 7,
dans laquelle le bras de guidage (21, 22) forme, avec le bras de maintien (28) et l'élément de blocage (51, 52), une géométrie sensiblement en forme de U.

9. Unité de frein (1) selon l'une des revendications précédentes,
dans laquelle l'unité porteuse (2) forme, au moins par tronçons, le boîtier d'unité d'actionnement (6).

10. Unité de frein (1) selon l'une des revendications précédentes,
dans laquelle l'élément de blocage (51, 52) attaque l'unité formant mâchoire (4) au moyen d'une longueur de chevauchement (U),
dans laquelle dans un état monté de l'unité de frein (1), l'unité formant mâchoire (4) est écartée du bras de guidage (21, 22) avec un jeu maximum (S),
dans laquelle le rapport entre le jeu maximum (S) et la longueur de chevauchement (U) est de 0,01 à 0,6, de préférence de 0,05 à 0,4, et de façon particulièrement préférée de 0,05 à 0,2.

11. Unité de frein (1) selon l'une des revendications précédentes,
dans laquelle l'unité porteuse (2) comprend quatre bras de guidage (21, 22, 23, 24), parmi lesquels deux bras respectifs bloquent une unité formant mâchoire (4) à l'encontre d'un déplacement parallèlement à la direction de guidage (F),
dans laquelle une première paire de bras de guidage (21, 22) est réalisée de préférence à symétrie plane par rapport à une seconde paire de bras de guidage (23, 24) par référence à un plan défini par la direction de guidage (F) et par la direction axiale (A).

12. Unité de frein (1) selon l'une des revendications précédentes,
dans laquelle l'unité formant mâchoire (4) est précontrainte par un élément de rappel (12) contre une unité d'actionnement.

13. Unité de frein (1) selon l'une des revendications précédentes,
dans laquelle il est prévu une pluralité d'éléments de blocage (51, 52) sur un bras de guidage (21, 22) et bloquent l'unité formant mâchoire (4) à l'encontre d'un déplacement le long de la direction axiale (A).

14. Procédé pour l'entretien d'une unité de frein (1),
dans lequel, dans un premier état, une unité formant mâchoire (4) est maintenue à l'intérieur d'un tambour de frein (10) contre une unité porteuse (2) et un élément de blocage (51) avec possibilité de déplacement le long d'une direction d'actionnement (B),
dans lequel l'unité porteuse (2) comprend deux bras de guidage (21, 22) réalisés sous forme de portions venues de fonderie ou forgées, entre lesquelles l'unité formant mâchoire (4) est maintenue et qui s'étendent à l'intérieur du tambour de frein (10),
dans lequel, dans une première étape, l'élément de blocage (51) est amené hors d'engagement avec l'unité formant mâchoire (4),
dans lequel, dans une seconde étape, l'unité formant mâchoire (4) est déplacée le long d'une direction axiale (A) et est enlevée hors de l'intérieur du tambour de frein (10),
dans lequel l'unité porteuse (2) reste à l'intérieur du tambour de frein (10).

15. Procédé selon la revendication 14,
dans lequel l'unité formant mâchoire (4) est ensuite introduite, avec des garnitures de frein rénovées, le long de la direction axiale (A) dans l'intérieur du tambour de frein (10) et est agencée entre deux bras de guidage (21, 22) de l'unité porteuse (2),
dans lequel l'élément de blocage (51, 52) est ensuite amené en engagement avec l'unité formant mâchoire (4), afin de bloquer celle-ci à l'encontre d'un déplacement le long de la direction axiale (A).
